(19) **Europäisches Patentamt / European Patent Office / Office européen des brevets**

(11) **EP 1 688 027 B1**

(12) # EUROPÄISCHE PATENTSCHRIFT

(45) Veröffentlichungstag und Bekanntmachung des Hinweises auf die Patenterteilung:
**28.11.2012   Patentblatt 2012/48**

(51) Int Cl.:
***A01B 69/00*** *(2006.01)*

(21) Anmeldenummer: **05026532.1**

(22) Anmeldetag: **06.12.2005**

(54) **Landfahrzeug mit automatischer Lenkung**

Automatically steered agricultural vehicle

Véhicule agricole à direction automatique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.02.2005   DE 102005005761**

(43) Veröffentlichungstag der Anmeldung:
**09.08.2006   Patentblatt 2006/32**

(73) Patentinhaber: **CLAAS Selbstfahrende Erntemaschinen GmbH
33428 Harsewinkel (DE)**

(72) Erfinder: **Brunnert, Andreas
33397 Friedberg (DE)**

(74) Vertreter: **Ellerbrächter, Dirk
c/o CLAAS KGaA mbH
Münsterstrasse 33
33428 Harsewinkel (DE)**

(56) Entgegenhaltungen:
**EP-A- 1 338 186     EP-A- 1 520 461
DE-A1- 3 313 547     US-A- 3 537 531
US-A- 3 946 825**

**Beschreibung**

Die vorliegende Erfindung betrifft ein Landfahrzeug mit wenigstens einer ersten lenkbaren Achse, einem Spursensor zum Erfassen einer Abweichung zwischen einem von dem Fahrzeug zu verfolgendem Weg und einem tatsächlich verfolgen Weg und einer automatischen Lenkeinrichtung, die eingerichtet ist, im Falle einer von dem Spursensor erfassten Abweichung die Lage der lenkbaren Achse nachzuführen, um die Abweichung zu verringern. Ein solches Landfahrzeug ist zum Beispiel aus DE 102 08 012 A1 oder DE 331 354 bekannt.

Wenn solches Fahrzeug auf ebenem Grund navigiert, besteht ein eindeutiger Zusammenhang zwischen einem von der automatischen Lenkeinrichtung eingestellten Einschlagwinkel der lenkbaren Achse und dem Krümmungsradius des von dem Fahrzeug zurückgelegten Wegs. Wenn die automatische Lenkeinrichtung eine Abweichung zwischen dem tatsächlich zurückgelegten und dem eigentlich zurückzulegenden Weg erkennt, ist es zwar wünschenswert, diese Abweichung möglichst schnell zu beheben und zu diesem Zweck einen großen Einschlagwinkel einzustellen, doch führt ein zu großer Einschlagwinkel dazu, dass der Kurs des Fahrzeugs anschließend den zu verfolgenden Weg kreuzt, anstatt, wie eigentlich wünschenswert wäre, auf diesen zu konvergieren. Der Einschlagwinkel darf daher nicht zu groß gemacht werden, das heißt allzu abrupte Lenkbewegungen sind zu vermeiden, wenn das Fahrzeug auf den zu verfolgenden Weg zurückgeführt werden soll.

Beim Navigieren auf abschüssigen Untergrund ist eine solche eindeutige Beziehung zwischen Einschlagwinkel und Wegverlauf nicht mehr gegeben. Um an einem Hang quer zur Gefällerichtung auf gleichbleibender Höhe geradeaus zu fahren, muss ein Einschlagwinkel eingestellt sein, der an sich einer hangaufwärts verlaufenden Kurve entspräche, wobei die Größe des zum Geradeausfahren erforderlichen Einschlagwinkels von der Hangneigung abhängig ist.

Dies führt zu Problemen beim automatischen Lenken eines solchen Fahrzeugs auf abschüssigen Untergrund. Ein Einschlagwinkel, der auf ebenem Untergrund geeignet sein mag, um eine gemessene Wegabweichung zu korrigieren, kann auf einem Hang, je nach Richtung der Hangneigung, ungenügend sein, um das Fahrzeug überhaupt an den zu verfolgenden Weg wieder anzunähern, oder die Annäherung kann wie bei einem zu starken Lenkungseinschlag in der Ebene so schnell sein, dass das Fahrzeug den zu verfolgenden Weg kreuzt, und dann in entgegengesetzter Richtung von diesem abweicht.

Aufgabe der Erfindung ist, ein Landfahrzeug zu schaffen, dass auch auf abschüssigem Untergrund präzise automatisch lenkbar ist.

Die Aufgabe wird bei einem Landfahrzeug der eingangs definierten Art durch die beanspruchten Merkmale gelöst. Mit anderen Worten kann bei gegebener Abweichung vom zum verfolgenden Weg der von der Lenkeinrichtung eingestellte Einschlagwinkel je nach Hangneigung unterschiedliche Werte einnehmen, und auch bei Übereinstimmung des tatsächlich verfolgten Weg des Fahrzeugs mit dem zu verfolgenden Weg kann ein nichtverschwindender Einschlagwinkel eingestellt sein, um eine Hangneigung zu kompensieren.

Um die Verarbeitung in der Lenkeinrichtung einfach zu halten, ist diese vorzugsweise eingerichtet, einen Einschlagwinkel wenigstens eines Rades der ersten lenkbaren Achse als Summe eines von der erfassten Abweichung abhängigen Terms und eines von der Neigung abhängigen Terms zu berechnen und einzustellen.

Eine verbesserte Manövrierfähigkeit des Fahrzeugs ist durch die zweite durch die Lenkeinrichtung lenkbare Achse erreichbar.

Um die Lenkung eines solchen Fahrzeugs einfach zu halten, ist die Lenkeinrichtung vorzugsweise eingerichtet, einen Einschlagwinkel wenigstens eines Rades der zweiten Achse anhand der Neigung und unabhängig von der Abweichung festzulegen und einzustellen. Die zweite lenkbare Achse dient dann lediglich der Kompensation eines Gefälles des Untergrundes, nicht aber zum Halten des Fahrzeugs auf dem zu verfolgenden Weg.

In letzterem Falle können der von der Neigung abhängige Term bei der Bestimmung des Einschlagwinkels für die erste Achse und der an der zweiten Achse einzustellende Einschlagwinkel gleich sein. Das heißt, der Verarbeitungsaufwand für die automatische Lenkung des Fahrzeugs mit zwei lenkbaren Achsen ist nicht größer als der für die Lenkung eines Fahrzeugs mit einer einzigen lenkbaren Achse.

Um das für die Neigung des befahrenen Untergrundes repräsentative Signal zu liefern, ist das Fahrzeug mit einem Neigungssensor ausgestattet. Alternativ ist als Quelle für das Neigungssignal ein Navigationssystem möglich, das eine topographische Karte des befahrenen Untergrundes umfasst und eingerichtet ist, die Position des Fahrzeugs auf der Karte zu ermitteln und Information über die Neigung des Untergrundes an der ermittelten Position des Fahrzeugs aus in der topographischen Karte enthaltener Höheninformation zu ermitteln.

Ein solches Navigationssystem zur Erfassung der geographischen Position des Fahrzeugs kann auch Teil des oben erwähnten Spursensors sein, der dann ferner einen Speicher für eine Beschreibung des von dem Fahrzeug zu verfolgenden Wegs und Mittel zum Erfassen einer Abweichung der erfassten Position des Fahrzeugs und dem zu verfolgenden Weg umfasst.

Alternativ oder ergänzend kann der Spursensor auch einen ortsauflösenden Umgebungssensor sowie Mittel zum Identifizieren des von dem Fahrzeug zu verfolgenden Wegs in einem von dem Umgebungssensor gelieferten Abbild der Umgebung und zum Ermitteln der Position des Fahrzeugs relativ zu dem Weg umfassen. Ein solcher Spursensor benötigt keine Karteninformation, um den zu verfolgenden Weg zu ermitteln, sondern erkennt diesen anhand von in der Umgebung des Fahrzeugs erfassbaren Merkmalen.

Gegenstand der Erfindung ist ferner ein Verfahren, wie beansprucht, zum Lenken eines erfindungsgemässen Fahrzeugs mit den Schritten:

a) Erfassen einer Abweichung zwischen einem von dem Fahrzeug zu verfolgenden Weg und einem tatsächlich verfolgten Weg;
b) Erfassen der Neigung des von dem Fahrzeug befahrenen Untergrundes quer zum verfolgten Weg;
c) Festlegen eines Einschlagwinkels für die lenkbare Achse anhand der Abweichung und der Neigung und Einstellen des Einschlagwinkels an der Achse.

Eine bevorzugte Anwendung der Erfindung liegt auf dem Gebiet der fahrbaren Landmaschinen wie etwa Traktoren, Mähdrescher oder dergleichen, bei denen die genaue Eznhaltung eines zu verfolgenden Weges wichtig ist, um mit minimalem Zeitaufwand eine landwirtschaftliche Fläche zu bearbeiten, beispielsweise zu pflügen, zu bestellen oder abzuernten.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1    eine schematische Draufsicht auf einen erfindungsgemäßen Traktor mit Mähwerk beim Abmähen einer wiese;

Fig. 2    den zeitlichen Verlauf einer erfassten Abweichung zwischen zu verfolgendem und tatsächlich verfolgtem Weg und eines zur Korrektur der Abweichung eingestellten Einschlagwinkels beim Fahren in der Ebene;

Fig. 3    einen Verlauf von Abweichung und Einschlagwinkel beim Fahren am Hang mit einem nichterfindungsgemäßen Lenkverfahren; und

Fig. 4    einen Verlauf von Abweichung und Einschlagwinkel bei dem erfindungsgemäßen Lenkverfahren.

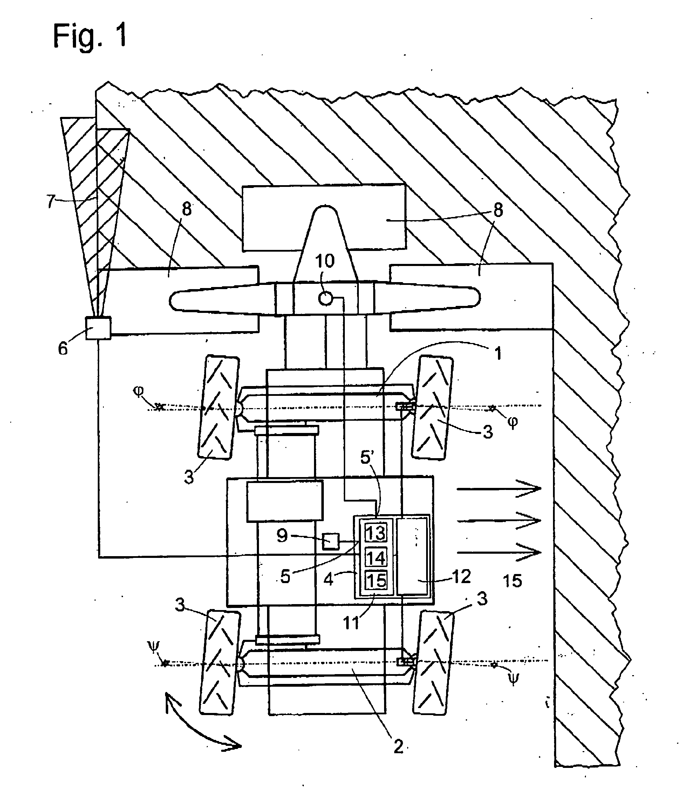

Der in Fig. 1 in einer stark schematisierten Draufsicht gezeigte Traktor hat ein Fahrwerk mit Vorder- und Hinterachse 1 bzw. 2, die jeweils 2 zwei Räder 3 tragen. Der Einschlagwinkel ist für jedes Rad 3 einzeln unter der Kontrolle einer Lenkeinrichtung 4 einstellbar, die einen Mikrocontroller 11 und ein von diesem gesteuertes Hydraulikaggregat 12 zum versorgen von Stellzylindern der Räder 3 mit Hydraulikfluid umfasst. Die Lenkeinrichtung 4 ist z. B. in der Lage, zum herkömmlichen Kurvenfahren an den 2 Rädern 3 der Vorderachse 1 einen von Null verschiedenen Einschlagwinkel und an denen der Hinterachse 2 einen verschwindenden Einschlagwinkel einzustellen, eine Fahrzeugbewegung schräg zur Fahrzeuglängsrichtung zu steuern, indem ein gleicher Einschlagwinkel an allen Rädern 3 eingestellt wird, oder Kurvenfahrt und Schrägbewegung zu überlagern.

Beim Fahren von Kurven mit engem Radius kann es zweckmäßig sein, unterschiedliche Einschlagwinkel für linke und rechte Räder 3 der gleichen Achse 1 oder 2 festzulegen, um unterschiedliche Krümmungsradien der von den Rädern zurückgelegten Wege zu berücksichtigen. In der nachfolgenden Beschreibung wird nur der Fall betrachtet, dass der Einschlagwinkel für beide Räder 3 einer Achse gleich ist; die Übertragung der Ausführungsbeispiele auf eine Lenkung, die unterschiedliche Einschlagwinkel für die Räder einer Achse zulässt, wird dem Fachmann keine Schwierigkeiten bereiten.

An den Mikrocontroller 11 der Lenkeinrichtung 4 gemäß einer ersten Ausgestaltung der Erfindung ist ein berührungsloser Umgebungssensor 6, hier ein im sichtbaren oder infraroten Spektralbereich arbeitender Lasersensor, angeschlossen, der die vor dem Traktor liegende Bodenfläche mit einem Laserstrahl abtastet und es einem Bildverarbeitungsmodul 13 des Mikrocontrollers 11 ermöglicht, anhand der Intensität von rückreflektiertem, aufgefangenem Laserlicht die Position des Traktors in Bezug auf eine Bearbeitungskante 7 zu erkennen. Im vorliegenden Fall, wo vorn am Traktor Mähwerke 8 montiert sind, ist die Bearbeitungskante 7 die Grenze zwischen einem ungemähten, in der Figur grob schraffiert dargestellten Bereich der befahrenen Wiese und einem von dem Traktor bereits gemähten Bereich. Ein Beispiel für den Sensor 6 ist ausführlich in DE 197 438 84 C2 beschrieben, so dass er an dieser Stelle nicht im Detail erläutert werden muss.

Außerdem ist ein Neigungssensor 9 an einen Eingang 5 eines Einschlagwinkelbestimmungsmoduls 14 des Mikrocontrollers 11 angeschlossen. Ein solcher Neigungssensor 9 kann z.B. einen mit einer Flüssigkeit teilweise gefüllten Behälter und Sensoren zum optischen oder mechanischen Erfassen der Lage des Flüssigkeitsspiegels in dem Behälter umfassen. Geeignet ist auch ein mit einer elektrisch leitfähigen Flüssigkeit gefüllter Behälter mit mehreren in die Flüssigkeit eintauchenden Elektroden, bei dem sich der Widerstand der Flüssigkeit zwischen den Elektroden in Abhängigkeit von der Lage des Flüssigkeitsspiegels ändert. Beispiele für einen geeigneten Neigungssensor 9 sind in DE 199 14 726 A1 und darin zitierten Schriften genauer beschrieben.

Um die Wiese mit optimaler Effizienz zu mähen, sollte der Traktor einen Weg fahren, bei dem die Außenkante der Mähwerke 8, an der der Sensor 6 angebracht ist, exakt an der Bearbeitungskante 7 entlang bewegt wird. Weicht der Traktor von diesem Weg nach links in der Figur ab, wird die Breite der Mähwerke nicht vollständig ausgenutzt; bei einer Abweichung nach rechts bleibt ein Stück der Wiese ungemäht. Die Lenkeinrichtung 4 unterstützt daher einen automatischen Lenkmodus, in welchem sie die Fahrtrichtung des Traktors anhand einer mit Hilfe des Bildverarbeitungsmoduls 13 und des Sensors 6 erfassten Abweichung der Mähwerkkante von der Bearbeitungskante 7 steuert.

Als Beispiel soll hier der Fall einer an sich bekannten Proportional-Integral-Regelung betrachtet werden, und zwar zunächst für das Fahren auf ebenem Untergrund. Bei einer solchen Regelung ist der von dem Einschlagwinkelbestimmungsmodul 14 festgelegte und mit Hilfe des Hydraulikaggregats 12 an den Rädern der Vorderachse 1 eingestellte Einschlagwinkel $\varphi(t)$ die Summe aus zwei Termen, einem zur vom Sensor 6 erfassten Abweichung $\delta(t)$ der Mähwerkkante von der Bearbeitungskante 7 proportionalen Term und einem zum Zeitintegral der mit einem Abklingfaktor multiplizierten Abweichung $\delta$ proportionalen Term:

$$\varphi(t) = a_1 \delta(t) + a_2 \int \delta(t-\tau) e^{-c\tau} d\tau \qquad (1)$$

wobei a, b, c jeweils geeignet gewählte Konstanten sind. Die Räder 3 der Hinterachse 2 sind dauerhaft bei einem Einschlagwinkel $\psi=0$ gehalten.

Wie in Fig. 1 zu erkennen, ist der Einschlagwinkel hier der Winkel zwischen der Drehachse eines Rades 3 und einer quer zur Fahrzeuglängsrichtung verlaufenden Ebene. Andere Definitionen des Einschlagwinkels sind möglich.

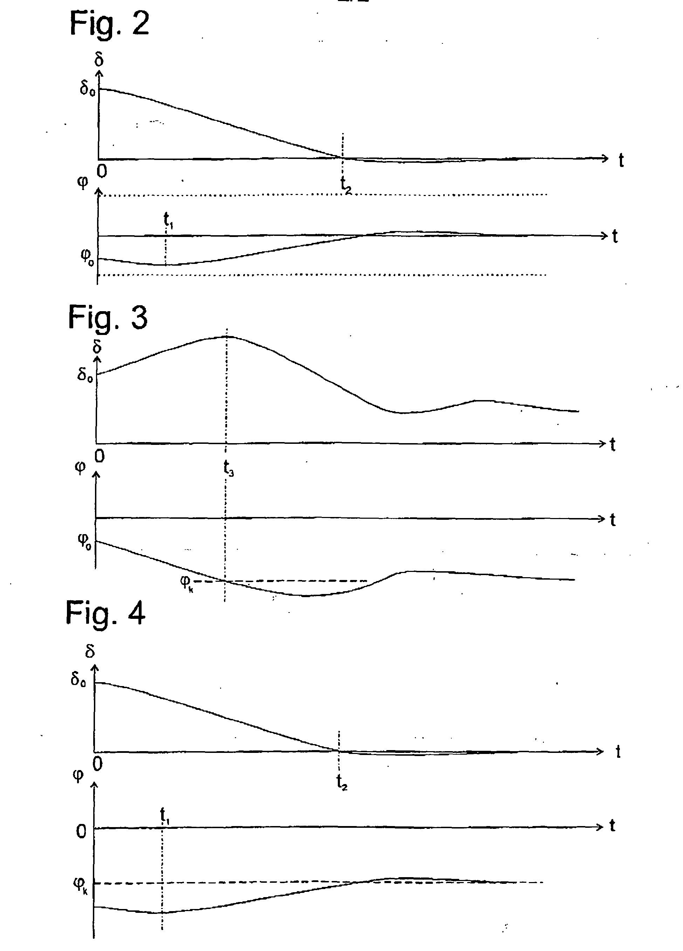

Fig. 2 veranschaulicht den zeitlichen Verlauf der Abweichung $\delta$ und des Einschlagwinkels $\varphi$ für den Fall, dass zur zeit t=0 die (hier als negativ angenommene) Abweichung $\delta_0$ gemessen wird. Zu Beginn der Regelung ist der Integralterm noch 0, und der an-fangs eingestellte Einschlagwinkel $\varphi_0$ ist allein durch den Proportionalterm gegeben. Der anfangs eingestellte Einschlagwinkel $\varphi_0$ wirkt der Abweichung $\delta$ entgegen, so dass der Betrag des Proportionalterms sofort beginnt, abzunehmen, doch wächst wegen des Bestehenbleibens der Abweichung der Betrag des Integralterms zunächst noch an, bis zur Zeit $t_1$ der Betrag des Einschlagwinkels $\varphi$ ein Maximum erreicht. zur Zeit $t_2$ ist die Abweichung $\delta=0$; da jedoch zu diesem Zeitpunkt der Integralterm nicht vollständig abgeklungen ist, kommt es anschließend zu einer geringfügigen Abweichung in Gegenrichtung, d.h. $\delta$ wird zeitweilig positiv, bevor die Regelung konvergiert.

Wendet man - entgegen der Lehre der vorliegenden Erfindung - diesen Regelungsansatz in gleicher Weise beim Fahren auf abschüssigen Untergrund an, kann es zu der in Fig. 3 dargestellten Situation kommen: die zu Beginn des Regelvorgangs gemessene Abweichung $\delta_0$ führt wie im Fall der Fig. 2 dazu, dass der Einschlagwinkel $\varphi_0$ eingestellt wird. Dieser Einschlagwinkel $\varphi_0$ ist jedoch nicht groß genug, um die Wirkung der Hangabtriebskraft auf den Traktor zu kompensieren. Der Betrag der Abweichung $\delta$ nimmt daher nicht von Anfang an ab, sondern wächst zunächst an, bis zu einem Maximum zur Zeit $t_3$. Der zu diesem Zeitpunkt eingestellte Einschlagwinkel $\varphi_k$ ist der Wert, der erforderlich ist, um die Hangabtriebskraft zu kompensieren und den Traktor parallel zur Bearbeitungskante 7 zu führen. Ab diesem Zeitpunkt nimmt die Abweichung $\delta$ ab, und mit einer gewissen Verzögerung wird auch der Betrag des Einschlagwinkels $\varphi$ wieder reduziert. Sobald dieser jedoch unter den zum Kompensieren der Hangabtriebskraft nötigen Wert $\varphi_k$ abfällt, wächst auch die Abweichung $\delta$ wieder an. Es gelingt somit nicht, den Traktor exakt wie gewünscht entlang der Bearbeitungskante 7 zu führen, sondern bestenfalls parallel zu dieser versetzt. Au-βerdem fällt die Fahrtrichtung des Traktors nicht mehr mit der Fahrzeuglängsrichtung zusammen.

Die Erfindung behebt dieses Problem, indem das Einschlagwinkelbestimmungsmodul 14 in die Berechung des Einschlagwinkels $\varphi(t)$ der Vorderachse 2 einen zum Gefälle $\vartheta$ des befahrenen Untergrundes quer zur Fahrtrichtung abhängigen Term, im einfachsten Falle einen linear proportionalen Term einbezieht, wie in nachfolgender Gleichung (2);

$$\varphi(t) = a_1 \delta(t) + b\vartheta + a_2 \int \delta(t-\tau) e^{-c\tau} d\tau \qquad (2)$$

und den Einschlagwinkel $\psi(t)$ für die Hinterradachse gemäß Gleichung (3) festlegt:

$$\psi(t) = b\vartheta \qquad (3)$$

Der Proportionalitätsfaktor b ist so gewählt, dass der Einschlagwinkel $b\vartheta$ jeweils den zum Geradeausfahren an einem Hang mit Gefälle $\vartheta$ erforderlichen Einschlagwinkel $\varphi_k(\vartheta)$ bzw. $\psi_k(\vartheta)$ ergibt. Diese Einschlagwinkel $\varphi_k(\vartheta)$, $\psi_k(\vartheta)$ können am Fahrzeug empirisch ermittelt und der daraus resultierende Proportionalitätsfaktor b der Lenkeinrichtung 4 fest vorgegeben werden.

Wie man leicht sieht, gilt für die Einschlagwinkel der Vorder- und Hinterachse $\varphi_k(t) = \psi_k(t)$, wenn die von der Abweichung abhängigen Terme verschwinden. D.h. wenn das Fahrzeug am Hang geradeaus fährt und dem zu verfolgenden Weg exakt folgt, wird die Hangabtriebskraft durch gleich Einschlagwinkel aller Räder 3 kompensiert, und der Traktor bewegt sich mit seiner Längsachse exakt in Fahrtrichtung.

Die Regelung ist wohlgemerkt auch auf ein Fahrzeug mit nur einer lenkbaren Achse anwendbar. Da in diesem Fall $\psi$ konstant 0 ist, ergibt sich ein anderer, im Allgemeinen größerer, Proportionalitätsfaktor b als bei einem Fahrzeug mit zwei lenkbaren Achsen. Auch bei einem solchen Fahrzeug ist es durch die Regelung möglich, den Traktor auf einem zurückzulegenden Weg exakt zu führen, allerdings nicht mit zur Fahrtrichtung paralleler Längsachse.

Die zeitliche Entwicklung der Wegabweichung $\delta$ und des Einschlagwinkels $\varphi$ bei einem Lenkvorgang unter Berücksichtigung des Gefälles $\vartheta$ gemäß der Erfindung ist in Fig. 4 gezeigt. Der Anfangswert $\delta_0$ zu Beginn des Regelvorgangs zur Zeit t=0 ist derselbe wie in den Fig. 2 und 3. Der Einschlagwinkel $\varphi$ setzt sich zusammen aus dem gefälleabhängigen Term $\varphi_k(\vartheta)=b\vartheta$ und den von der Abweichung abhängigen Termen der Gl. 1 und ist daher von Anfang an um $\varphi_k(\vartheta)$ größer als im Fall der Fig. 2. Da der Hangabtrieb kompensiert ist, entwickeln sich die Abweichung $\delta$ und dementsprechend auch die von der Abweichung $\delta$ abhängigen Terme des Einschlagwinkels $\varphi$ (t) genauso wie in Fig. 2 gezeigt. Der Traktor ist somit in der Lage, trotz der auf ihn wirkenden Hangabtriebskraft die Bearbeitungskante 7 exakt zu verfolgen.

Einer zweiten Ausgestaltung zufolge sind der Umgebungssensor 6 und das Bildverarbeitungsmodul 13 ersetzt durch ein Navigationssystem 10 (siehe Fig. 1), z. B. auf Grundlage des GPS-Systems, das in der Lage ist, die geographische Position des Traktors mit einer hohen Genauigkeit, vorzugsweise 0,2m oder weniger, zu erfassen, und einen elektronischen Speicher 15. Durch Aufzeichnen des vom Traktor beim Mähen (oder einer beliebigen anderen Art der Bodenbearbeitung) zurückgelegten Weges in dem Speicher 15 ist das Einschlagwinkelbestimmungsmodul 14 in der Lage, den Verlauf einer aus dieser Bearbeitung resultierenden Bearbeitungskante 7 bzw. einen anschließend entlang dieser Bearbeitungskante 7 zu verfolgenden Weg, der eine lückenlose und ökonomische Bodenbearbeitung gewährleistet, zu berechnen.

Die Steuerung des Traktors entlang des so berechneten Weges erfolgt unter Nutzung der vom Neigungssensor 9 gelieferten Messwerte der Neigung $\vartheta$ wie oben mit Bezug auf Fig. 4 beschrieben.

Eine dritte Ausgestaltung verwendet ein Naviga-tionssystem 10, das zusätzlich eingerichtet ist, die von ihm ermittelte geographische Position des Traktors mit einem dieser Position entsprechenden Punkt einer Landkarte zu verknüpfen, die in einem mit dem Navigationssystem 10 verbundenen, nicht in der Fig. 1 dargestellten elektronischen Speicher gespeichert ist. Aus in der Landkarte enthaltenen Höheninformationen berechnet das Navigationssystem 10 die Hangneigung quer zum zurückgelegten Weg am Ort des Traktors und stellt diese der Lenkeinrichtung 4 als ein für die Neigung $\vartheta$ des befahrenen Untergrundes repräsentatives Signal an einem in Fig. 1 mit 5' bezeichneten Eingang zur Verfügung. Die Berechnung kann z. B. erfolgen durch Berechnen des Gradientenvektors der Geländehöhe am Ort des Fahrzeugs aus Angaben über die Höhen von zu diesem Ort benachbarten Punkten und Berechnen der Projektion dieses Gradienten auf eine zur Fahrtrichtung senkrechte Richtung. Der zurückzulegende Weg kann wie in der ersten Ausgestaltung durch Erkennen vorgegebener Merkmale des Weges in der Umgebung mit Hilfe eines Umgebungssensors 6 erkannt oder wie in der zweiten Ausgestaltung aus einem zuvor zurückgelegten Weg berechnet werden. Die Festlegung des Einschlagwinkels $\varphi$ oder der Einschlagwinkel $\varphi$ und $\psi$ durch das Einschlagwinkelbestimmungsmodul 14 läuft ab wie bei den vorhergehenden Ausgestaltungen.

**Bezugszeichen**

| | |
|---|---|
| 1 | vorderachse |
| 2 | Hinterachse |
| 3 | Rad |
| 4 | Lenkeinrichtung |
| 5 | Eingang |
| 6 | Umgebungssensor |
| 7 | Bearbeitungskante |
| 8 | Mähwerk |
| 9 | Neigungssensor |
| 10 | Navigationssystem |
| 11 | Mikrocontroller |
| 12 | Hydraulikaggregat |
| 13 | Bildverarbeitungsmodul |

14    Einschlagwinkelbestimmungamodul
15    Speicher

**Patentansprüche**

1.  landfahrzeug mit wenigstens einer ersten lenkbaren Achse (1, 2), einem Spursensor (6, 13; 10, 13) zum Erfassen einer Abweichung zwischen einem von dem Fahrzeug zu verfolgenden Weg und einem tatsächlich verfolgten Weg und einer automatischen Lenkeinrichtung (4), die eingerichtet ist, im Falle einer von dem Spursensor (6, 10) erfassten Abweichung einen Einschlagwinkel ($\varphi$, $\psi$) der lenkbaren Achse (1, 2) nachzuführen, um die Abweichung zu verringern, **dadurch gekennzeichnet, dass** die Lenkeinrichtung (4) über einen Eingang (5, 5') für ein Signal verfügt, das für die Neigung des von dem Fahrzeug befahrenen Untergrundes quer zum verfolgten Weg repräsentativ ist, und dass die Lenkeinrichtung (4) eingerichtet ist, beim Nachführen des Einschlagwinkels ($\varphi$, $\psi$) die Neigung zu berücksichtigen
, und dass das Fahrzeug eine zweite durch die Lenkeinrichtung (4) lenkbare Achse (2) aufweist.
Und dass es einen Neigungssensor (9) aufweist, der das für die Neigung ($\vartheta$) des befahrenen Untergrundes repräsentative Signal liefert.

2.  Fahrzeug nach Anspruch 1, **dadurch gekennzeichnet, dass** die Lenkeinrichtung (4) eingerichtet ist, den Einschlagwinkel ($\varphi$) wenigstens eines Rades (3) der ersten Achse (1) als Summe eines von der erfassten Abweichung ($\delta$) abhängigen Terms und eines von der Neigung ($\vartheta$) abhängigen Terms zu berechnen und einzustellen.

3.  Fahrzeug nach Anspruch 1 oder 2, **dadurch gekennzeichnet, dass** die Lenkeinrichtung (4) eingerichtet ist, den Einschlagwinkel ($\psi$) wenigstens eine Rades (3) der zweiten Achse (2) anhand der Neigung ($\vartheta$) und unabhängig von der Abweichung ($\delta$) festzulegen und einzustellen.

4.  Fahrzeug nach Anspruch 2 und Anspruch 3, **dadurch gekennzeichnet, dass** der von der Neigung abhängige Term und der an der an der zweiten Achse einzustellende Einschlagwinkel ($\psi$) gleich sind.

5.  Fahrzeug nach einem der vorhergehenden Ansprüche, **dadurch gekennzeichnet, dass** der Spursensor (10, 13, 15) ein Navigationssystem (10) zur Erfassung der geographischen Position des Fahrzeugs, einen Speicher (15) für eine Beschreibung des von dem Fahrzeug zu verfolgenden Wegs und Mittel (13) zum Erfassen einer Abweichung zwischen der erfassten Position und dem zu verfolgenden Weg umfasst.

6.  Fahrzeug nach einem der vorhergehenden Ansprüche, **dadurch gekennzeichnet, dass** der Spursensor einen ortsauflösenden Umgebungssensor (6) sowie Mittel (13) zum Identifizieren des von dem Fahrzeug zu verfolgenden Wegs in einem vom Umgebungssensor gelieferten Abbild der Umgebung und zum Ermitteln der Position des Fahrzeugs relativ zu dem Weg umfasst.

7.  Verfahren zum Lenken eines Fahrzeugs nach einem den nonhergehenden Ansprüche
, mit den Schritten:

    a) Erfassen einer Abweichung ($\delta$) zwischen einem von dem Fahrzeug zu verfolgenden Weg und einem tatsächlich verfolgten Weg;
    b) Erfassen der Neigung ($\vartheta$) des von dem Fahrzeug befahrenen Untergrundes quer zum verfolgten Weg;
    c) Festlegen eines Einschlagwinkels ($\varphi$) für die lenkbare Achse (1, 2) anhand der Abweichung und der Neigung und Einstellen des Einschlagwinkels ($\varphi$) an der Achse (1, 2).

8.  Verfahren nach Anspruch 7, **dadurch gekennzeichnet, dass** in Schritt c) der Einschlagwinkel ($\varphi$) durch Addition eines von der erfassten Neigung ($\vartheta$) abhängigen und von der erfassten Abweichung ($\delta$) unabhängigen Terms und eines von der erfassten Abweichung ($\delta$) abhängigen und von der erfassten Neigung ($\vartheta$) unabhängigen Terms festgelegt wird.

9.  Verfahren nach Anspruch 8, **dadurch gekennzeichnet, dass** ein Einschlagwinkel für die zweite lenkbare Achse (2) des Fahrzeugs abhängig von der erfassten Neigung ($\vartheta$) und unabhängig von der erfassten Abweichung ($\delta$) festgelegt wird.

10. Verfahren nach Anspruch 9, **dadurch gekennzeichnet, dass** der Einschlagwinkel für die zweite lenkbare Achse (2) und der von der erfassten Neigung abhängige und von der erfassten Abweichung unabhängige Term gleich festgelegt werden.

**Claims**

1. A land vehicle comprising at least one first steerable axle (1, 2), a track sensor (6, 13; 10, 13) for detecting a deviation between a path to be followed by the vehicle and a path which is actually being followed, and an automatic steering device (4) adapted in the case of a deviation detected by the track sensor (6, 10) to adjust a lock angle ($\varphi$, $\psi$) of the steerable axle (1, 2) to reduce the deviation, **characterised in that** the steering device (4) has an input (5, 5') for a signal which is representative of the slope of the ground surface over which the vehicle is travelling transversely to the path being followed, and the steering device (4) is adapted to take account of the slope when adjusting the lock angle ($\varphi$, $\psi$), and the vehicle has a second axle (2) steerable by the steering device (4) and it has a slope sensor (9) which provides the signal which is representative of the slope ($\vartheta$) of the ground surface over which the vehicle is travelling.

2. A vehicle according to claim 1 **characterised in that** the steering device (4) is adapted to calculate and set the lock angle ($\varphi$) of at least one wheel (3) of the first axle (1) as the sum of a term dependent on the detected deviation ($\delta$) and a term dependent on the slope ($\vartheta$).

3. A vehicle according to claim 1 or claim 2 **characterised in that** the steering device (4) is adapted to calculate and set the lock angle ($\psi$) of at least one wheel (3) of the second axle (2) on the basis of the slope ($\vartheta$) and independently of the deviation ($\delta$).

4. A vehicle according to claim 2 and claim 3 **characterised in that** the term dependent on the slope and the lock angle ($\psi$) to be set at the second axle are the same.

5. A vehicle according to one of the preceding claims **characterised in that** the track sensor (10, 13, 15) includes a navigation system (10) for detecting the geographical position of the vehicle, a memory (15) for a description of the path to be followed by the vehicle and means (13) for detecting a deviation between the detected position and the path to be followed.

6. A vehicle according to one of the preceding claims **characterised in that** the tack sensor includes a position-resolving environment sensor (6) and means (13) for identifying the path to be followed by the vehicle in an image of the environment that is provided by the environment sensor and for ascertaining the position of the vehicle relative to the path.

7. A method of steering a vehicle according to one of the preceding claims comprising the steps:

   a) detecting a deviation ($\delta$) between a path to be followed by the vehicle and a path which is actually being followed:
   b) detecting the slope ($\vartheta$) of the ground surface over which the vehicle is travelling transversely to the path being followed, and
   c) establishing a lock angle ($\varphi$) for the steerable axle(1, 2) on the basis of the deviation and the slope and setting the lock angle ($\varphi$) at the axle (1, 2).

8. A method according to claim 7 **characterised in that** in step c) the lock angle ($\varphi$) is established by addition of a term dependent on the detected slope ($\vartheta$) and independent of the detected deviation ($\delta$) and a term dependent on the detected deviation ($\delta$) and independent of the detected slope ($\vartheta$).

9. A method according to claim 8 **characterised in that** a lock angle for the second steerable axle (2) of the vehicle is established in dependence on the detected slope ($\vartheta$) and independently of the detected deviation ($\delta$).

10. A method according to claim 9 **characterised in that** the lock angle for the second steerable axle (2) and the term dependent on the detected slope and independent of the detected deviation are established equally.

**Revendications**

1.  Véhicule agricole possédant au moins un premier essieu orientable (1, 2), un capteur de voie (6, 13 ; 10, 13) permettant de détecter un écart entre un chemin devant être suivi par le véhicule et un chemin réellement suivi, et un dispositif de direction automatique (4) qui, en présence d'un écart détecté par le capteur de voie (6, 10), est conçu pour ajuster un angle de braquage ($\varphi$, $\psi$) de l'essieu orientable (1, 2) afin de réduire l'écart, **caractérisé en ce que** le dispositif de direction (4) dispose d'une entrée (5, 5') pour un signal représentatif de l'inclinaison du terrain parcouru par le véhicule transversalement au chemin suivi, et **en ce que** le dispositif de direction (4) est conçu pour tenir compte de l'inclinaison lors de l'ajustage de l'angle de braquage ($\varphi$, $\psi$).

2.  Véhicule selon la revendication 1, **caractérisé en ce que** le dispositif de direction (4) est conçu pour calculer et régler l'angle de braquage ($\varphi$) d'au moins une roue (3) du premier essieu (1) en tant que somme d'un terme dépendant de l'écart ($\delta$) détecté et d'un terme dépendant de l'inclinaison ($\vartheta$).

3.  Véhicule selon la revendication 1 ou 2, **caractérisé en ce que** le dispositif de direction (4) est conçu pour déterminer et régler l'angle de braquage ($\psi$) d'au moins une roue (3) du deuxième essieu (2) à partir de l'inclinaison ($\vartheta$) et indépendamment de l'écart ($\delta$).

4.  Véhicule selon la revendication 2 et la revendication 3, **caractérisé en ce que** le terme dépendant de l'inclinaison et l'angle de braquage ($\psi$) à régler sur le deuxième essieu sont identiques.

5.  Véhicule selon une des revendications précédentes, **caractérisé en ce que** le capteur de voie (10, 13, 15) comprend un système de navigation (10) permettant de détecter la position géographique du véhicule, une mémoire (15) pour une description du chemin devant être suivi par le véhicule, et des moyens (13) pour détecter un écart entre la position détectée et le chemin à suivre.

6.  Véhicule selon une des revendications précédentes, **caractérisé en ce que** le capteur de voie comprend un capteur d'environnement (6) à résolution spatiale ainsi que des moyens (13) pour identifier le chemin devant être suivi par le véhicule dans une représentation de l'environnement fournie par le capteur d'environnement et pour déterminer la position du véhicule par rapport au chemin.

7.  Procédé pour diriger un véhicule selon une des revendications précédentes, comportant les étapes consistant à :

    a) détecter un écart ($\delta$) entre un chemin devant être suivi par le véhicule et un chemin réellement suivi ;
    b) détecter l'inclinaison ($\vartheta$) du terrain parcouru par le véhicule transversalement au chemin suivi ;
    c) déterminer un angle de braquage ($\varphi$) pour l'essieu orientable (1, 2) à partir de l'écart et de l'inclinaison, et régler l'angle de braquage ($\varphi$) sur l'essieu (1, 2).

8.  Procédé selon la revendication 7, **caractérisé en ce que**, à l'étape c), l'angle de braquage ($\varphi$) est déterminé par addition d'un terme dépendant de l'inclinaison ($\vartheta$) détectée et indépendant de l'écart ($\delta$) détecté et d'un terme dépendant de l'écart ($\delta$) détecté et indépendant de l'inclinaison ($\vartheta$) détectée.

9.  Procédé selon la revendication 8, **caractérisé en ce qu'**un angle de braquage pour le deuxième essieu orientable (2) du véhicule est déterminé en fonction de l'inclinaison ($\vartheta$) détectée et indépendamment de l'écart ($\delta$) détecté.

10. Procédé selon la revendication 9, **caractérisé en ce que** l'angle de braquage du deuxième essieu orientable (2) et le terme dépendant de l'inclinaison détectée et indépendant de l'écart détecté sont déterminés de la même manière.

# Fig. 1

# Fig. 2

# Fig. 3

# Fig. 4

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10208012 A1
- DE 331354
- DE 19743884 C2
- DE 19914726 A1